Europäisches Patentamt

European Patent Office

Office européen des brevets

(11) Veröffentlichungsnummer: **0 352 858**

**A2**

(12) # EUROPÄISCHE PATENTANMELDUNG

(21) Anmeldenummer: 89201930.8

(22) Anmeldetag: 24.07.89

(51) Int. Cl.⁴: H01L 41/08

(30) Priorität: 28.07.88 DE 3825587

(43) Veröffentlichungstag der Anmeldung:
31.01.90 Patentblatt 90/05

(84) Benannte Vertragsstaaten:
DE FR GB

(71) Anmelder: Philips Patentverwaltung GmbH
Wendenstrasse 35 Postfach 10 51 49
D-2000 Hamburg 1(DE)

(84) DE

Anmelder: N.V. Philips' Gloeilampenfabrieken
Groenewoudseweg 1
NL-5621 BA Eindhoven(NL)

(84) FR GB

(72) Erfinder: Mauczok, Rüdiger
Lindemannhof 12
D-5140 Erkelenz(DE)
Erfinder: Oepen, Heinrich
Wenauer Strasse 6
D-5190 Stolberg 11(DE)
Erfinder: Schnabel, Peter, Dr.rer.nat.
Meischenfeld 51
D-5100 Aachen(DE)

(74) Vertreter: Kupfermann, Fritz-Joachim,
Dipl.-Ing. et al
Philips Patentverwaltung GmbH
Wendenstrasse 35 Postfach 10 51 49
D-2000 Hamburg 1(DE)

(54) **Piezoelekrischer Linearmotor.**

(57) Die Erfindung bezieht sich auf einen piezoelekrischen Linearmotor zur Ausführung von Linearbewegungen relativ zu einer Schiene (3), auf die in gegenseitigem Abstand piezoelektrische Klemmvorrichtungen (4) mit Klemmaktuatoren (13) einwirken, die abwechselnd im Gegentakt die Schiene (3) festklemmen, wobei der gegenseitige Abstand der Klemmvorrichtungen (4) mittels eines diese verbindenden piezoelektrischen Vorschubaktuators (19) im Takt des wechselseitigen Klemmens der Klemmvorrichtungen (4) um das Längungsmaß des Vorschubaktuators (19) veränderbar ist und wobei die piezoelektrischen Klemmaktuatoren (13) in Längungsrichtung an der Basis (8, 28) eines Klemmbügels (5, 25) angreifen mittels im Abstand voneinander angeordneter Füße (12, 31, 32), wobei die freien Bügelarme (6, 7; 26, 27) bei Längung des piezoelektrischen Klemmaktuators (13) und Durchbiegung der Basis (8, 28) die Schiene (3) zwischen sich einklemmen.

Fig.1

Xerox Copy Centre

## Piezoelektrischer Linearmotor

Die Erfindung bezieht sich auf einen piezoelektrischen Linearmotor zur Ausführung von Linearbewegungen relativ zu einer Schiene, auf die in gegenseitigem Abstand piezoelektrische Klemmvorrichtungen mit Klemmaktuatoren einwirken, die abwechselnd im Gegentakt die Schiene festklemmen.

Ein derartiger piezoelektrischer Linearmotor ist aus der DE-OS 19 33 205 bekannt. Dieser Linearmotor, der nur für kurze Verschiebungen von Betätigungsansätzen gegenüber einem ruhenden Stator geeignet ist, weist im Abstand voneinander piezoelektrische Klemmvorrichtungen auf. Die Betätigungsansätze sind über einen weiteren piezoelektrischen Vorschubaktuator verbunden, der die Schieneneinheit, bestehend aus piezoelektrischem Vorschubaktuator und Betätigungsansätzen, längen und kürzen kann. Jede der Klemmvorrichtungen wirkt auf einen der Betätigungsansätze ein. Durch wechselseitiges Festklemmen des einen und anderen Betätigungsansatzes und einem zeitlich dazwischen liegenden Längen der Schieneneinheit lassen sich die Betätigungsansätze in der einen oder anderen Richtung verschieben.

Sollen mit Hilfe des piezoelektrischen Motors irgendwelche mechanischen Bauteile, beispielsweise eine Lesevorrichtung eines optischen Abtastsystems, bewegt werden, dann muß der Linearmotor größere Kräfte ausüben können. Dies setzt aber auch gute Klemmeigenschaften der Klemmvorrichtungen voraus, die bei den vorbekannten Bauarten nicht definiert sind.

Es ist Aufgabe der Erfindung, einen piezoelektrischen Motor der eingangs erwähnten Art zu schaffen, der mit geringem technischem Aufwand eine starke Klemmung an der Schiene herbeiführt.

Die gestellte Aufgabe ist bei einer Ausführungsform der Erfindung erfindungsgemäß dadurch gelöst, daß der gegenseitige Abstand der Klemmvorrichtungen mittels eines diese verbindenden piezoelektrischen Vorschubaktuators im Takt des wechselseitigen Klemmens der Klemmvorrichtungen um das Längungsmaß des Vorschubaktuators veränderbar ist und daß die einen piezoelektrischen Klemmaktuatoren in Längsrichtung an der Basis eines Klemmbügels angreifen mittels im Abstand voneinander angeordneter Füße, wobei die freien Bügelarme bei Längung des piezoelektrischen Klemmaktuators und Durchbiegung der Basis die Schiene zwischen sich einklemmen.

Die Längung eines Klemmaktuators beträgt gewöhnlich nur wenige Mikrometer. Biegt der piezoelektrische Klemmaktuator die Basis des Klemmbügels durch, so wird durch dessen Hebelwirkung der Hebelweg an der Schiene so stark vergrößert, daß sich eine zuverlässige Klemmung ergibt.

Nach einer weiteren Ausgestaltung der Erfindung ist vorgesehen, daß an den freien Enden der Bügelarme Andrucklager vorgesehen sind, zwischen denen die Schiene einklemmbar ist. Dadurch ergibt sich eine sichere Lagerung zwischen den Bügelarmen und der Schiene.

Nach einer weiteren Ausgestaltung der Erfindung ist ein Andruckstück vorgesehen, welches senkrecht zur Klemmrichtung der Andrucklager gegen die Schiene zustellbar ist. Das Andruckstück ist dabei an einem Federbügel angeordnet, dessen Befestigungsende an der Basis befestigt ist und dessen freies Einstellende zur Abstandseinstellung mittels einer Stellschraube gegenüber der Schiene einstellbar ist zur Einstellung der Andruckkraft des Andruckstückes gegenüber der Schiene. Auf diese Weise erfolgt eine Dreipunkt-Verklemmung, die sehr sicher ist.

Bei einer anderen Ausführungsform der Erfindung ist vorgesehen, daß die Klemmaktuatoren als langgestreckte Biegeaktuatoren ausgebildet und jeweils mit einem ihrer Enden an der zugeordneten Klemmvorrichtung angeordnet sind und mit den anderen freien Enden gegen die Schiene und ein Andrucklager der Klemmvorrichtung drückbar sind.

Der Vorteil dieser Ausführungsform besteht darin, daß die Toleranzen der Schiene nur noch eine geringe Bedeutung haben. Die Klemmkraft der langgestreckten Biegeaktuatoren führt stets zu einer ausreichenden Verklemmung.

Nach einer weiteren Ausgestaltung der Erfindung ist vorgesehen, daß die Klemmaktuatoren und der Vorschubaktuator als laminierte Vielschichtaktuatoren ausgeführt sind, die aus einer Vielzahl piezoelektrischer Keramikschichten mit metallischen Zwischenelektroden bestehen. Derartige Vielschichtaktuatoren, die beispielsweise 20 bis 50 Schichten aus Piezokeramik mit metallischen Zwischenelektroden aufweisen, können mit wesentlich geringeren Erregerspannungen betrieben werden. Solche Erregerspannungen können beispielsweise zwischen 10 V und 20 V liegen.

Nach einer weiteren Ausgestaltung der Erfindung ist vorgesehen, daß die Andrucklager eine V-förmige Lagergrube ausweisen. Derartige Lagergruben gestatten eine genau definierte Anlage der Klemmvorrichtungen an der Schiene.

Nach einer weiteren Ausgestaltung der Erfindung ist vorgesehen, daß eines der Andrucklager eine V-förmige Lagergrube und das andere eine Stellschraube ist, mit der die Andruckkraft der Schiene gegen die Lagergrube einstellbar ist. Die Andruckkraft läßt sich damit konzentriert aufbringen, wodurch die Klemmwirkung verbessert wird.

Nach einer weiteren Ausgestaltung der Erfindung ist vorgesehen, daß beide Andrucklager des Klemmbügels als V-förmige Lagergruben ausgebildet sind. Zwei V-förmige Lagergruben führen zu einer besseren Umklammerung.

Die Erfindung wird anhand der Zeichnung näher erläutert. Es zeigen:

Fig. 1 einen piezoelektrischen Linearmotor in Seitenansicht,

Fig. 2 den piezoelektrischen Linearmotor nach Fig. 1 mit zwei Klemmvorrichtungen sowie zwei piezoelektrischen Aktuatoren für die Klemmvorrichtungen und einem piezoelektrischen Aktuator für die Fortbewegung im Zusammenwirken mit einer Schiene,

Fig. 3 eine abgewandelte Form des Linearmotors mit anders ausgebildeten Klemmvorrichtungen,

Fig. 4 eine Seitenansicht und

Fig. 5 eine Draufsicht auf eine weitere Ausführungsform der Erfindung.

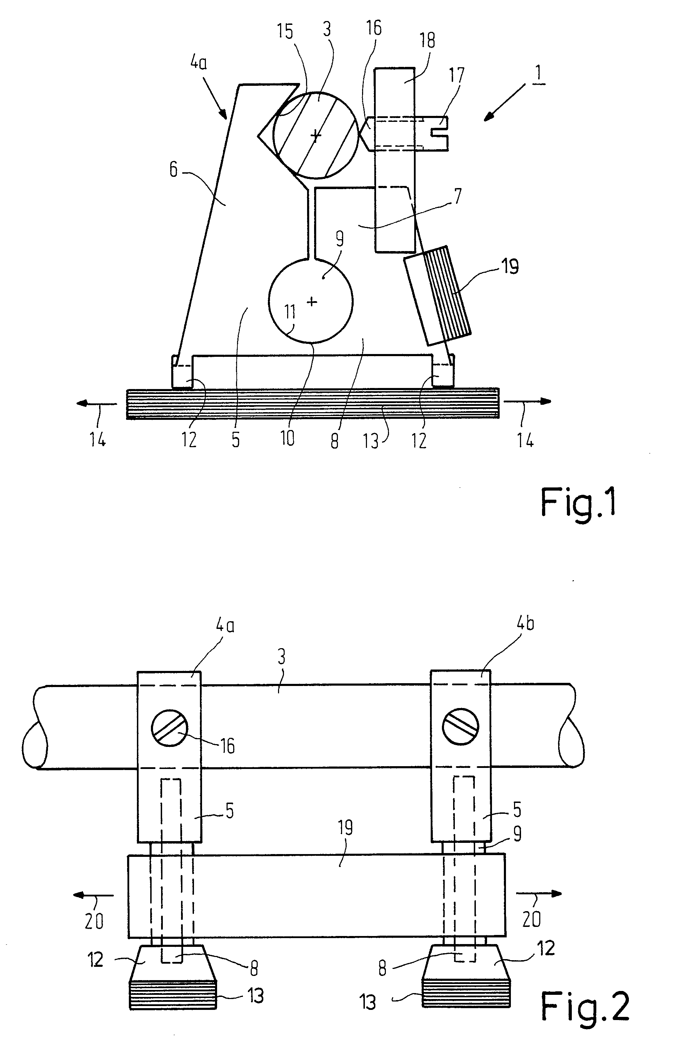

Der in den Fig. 1 und 2 dargestellte Linearmotor 1 ist als Einheit längs einer Schiene 3 verschieblich, z. B. mit einer Geschwindigkeit von 1 cm/sec. An der Schiene 3 greifen zwei Klemmvorrichtungen 4a und 4b an. Jede der Klemmvorrichtungen besteht aus einem Bügel 5 mit zwei Bügelarmen 6, 7 und einer Basis 8. Zwischen den Bügelarmen befindet sich ein Einschnitt 9. Die Basis 8 weist eine Querschnittsverjüngung 10 im Bereich eines Einschnittbogens 11 auf. An der Basis 8 sind beiderseits des Einschnittbogens 11 zwei Füße 12 vorgesehen. Die Füße 12 sind an einem piezoelektrischen Klemmaktuator befestigt. Dieser piezoelektrische Klemmaktuator 13 ist in Richtung von Pfeilen 14 längbar, und aufgrund seiner elektrisch erregten Längung sind die Füße 12 auseinander drückbar.

Der Bügelarm 6 weist ein V-förmiges Andrucklager 15 und der Bügel 7 ein punktförmiges Andrucklager 16 auf. Das punktförmige Andrucklager 16 wird gebildet von einer Klemmschraube 17, die in einem Ansatz 18 des Bügels 7 drehbar und in Richtung auf die Schiene 3 zustellbar gelagert ist.

Die beiden Klemmvorrichtungen 4a und 4b sind verbunden mittels eines piezoelektrischen Vorschubaktuators 19, der in Richtung der Pfeile 20 längbar ist.

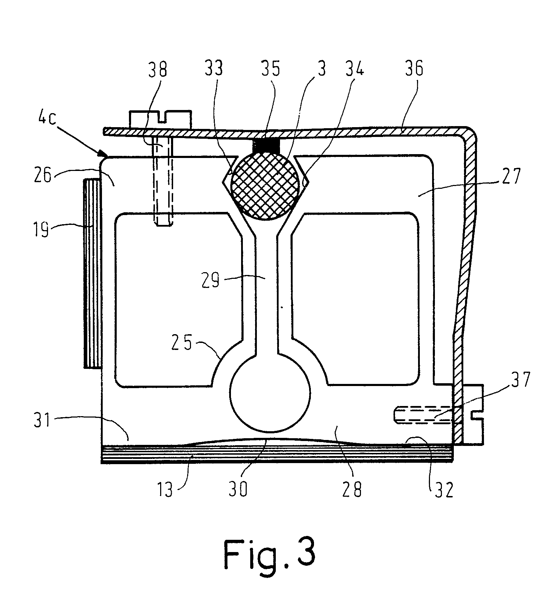

Der piezoelektrische Linearmotor nach Fig. 3 ähnelt dem nach Fig. 1 und 2, und auch er kann sich im Raupengang längs der Schiene 3 fortbewegen. Es ist nur eine der Klemmvorrichtungen 4c dargestellt. Die Klemmvorrichtung 4c besteht wieder aus zwei Bügelarmen 26, 27, die über eine Basis 28 verbunden sind. Zwischen den Bügelarmen 26 und 27 befindet sich ein Einschnitt 29, der im Bereich 30 der Basis 28 deren Querschnitt vermindert. Die etwas breiter ausgebildeten Füße 31, 32 der Basis sind verbunden mit dem piezoelektrischen Klemmaktuator 13. Beide Klemmvorrichtungen dieses Motors sind wie bei dem Motor nach Fig. 1 und 2 über einen piezoelektrischen Vorschubaktuator 19 verbunden.

Beide freien Enden der Bügelarme 26 und 27 sind mit V-förmigen Lagergruben 33, 34 versehen, die gegen die Schiene 3 zustellbar sind. Weiterhin ist ein Andruckstück 35 vorgesehen, das an einem Federbügel 36 befestigt ist. Ein Ende dieses Federbügels 36 ist im Bereich der Basis 28 mittels einer Schraube 37 an der Basis 28 festgelegt. Das andere freie Ende trägt eine Stellschraube 38, die zur Höhenverstellung des freien Endes gegenüber dem Bügelarm 26, in den sie eingeschraubt ist, hinein und heraus drehbar ist. Durch ein verstärktes Anschrauben kann der Andruck des Andruckstückes gegen die Schiene erhöht werden.

Beide Linearmotoren arbeiten in derselben Weise. Es wird zunächst eine Klemmvorrichtung, beispielsweise in Fig. 2 die Klemmvorrichtung 4a, durch Längung des piezoelektrischen Klemmaktuators 13 erregt und gegen die Schiene 3 gedrückt. Der Klemmaktuator 13 der Klemmvorrichtung 4b ist nicht erregt, und der Klemmbügel 5 gibt die Schiene 3 frei. Nun wird der Vorschubaktuator 19 erregt. Die Klemmvorrichtung 4b entfernt sich infolge seiner Längung um wenige μm von der Klemmvorrichtung 4a. Ist die Längung des Vorschubelementes 19 abgeschlossen, dann wird durch Erregen des Klemmaktuators 13 der Klemmvorrichtung 4b die Schiene im Bereich der Klemmvorrichtung 4b festgeklemmt. Nun wird der Klemmaktuator 13 der Klemmvorrichtung 4a entregt, und die Klemmvorrichtung 4a gibt die Schiene frei. Wird nun auch der Vorschubaktuator 19 entregt, so zieht sich dieser zusammen. Es schiebt sich dann die Klemmvorrichtung 4a um das Ausmaß des Zusammenziehens im Raupengang hinter der Klemmvorrichtung 4b her.

Diese Vorgänge wiederholen sich nun, indem erneut die Klemmvorrichtung 4a erregt wird und die Schiene 3 von ihr festgeklemmt wird. Daraufhin wird die Klemmvorrichtung 4b entregt, und der Vorschubaktuator 19 wird erregt. Bei seiner Längung schiebt sich nun die Klemmvorrichtung 4b um das Ausmaß der Längung des Vorschubaktuators weiter vor.

Die Aktuatoren 13 und 19 sind vorzugsweise als Vielschichtaktuatoren ausgebildet, wobei sich zwischen den piezoelektrischen Keramikplättchen jeweils Metallschichten als Elektroden befinden. Dadurch genügt eine Spannung von typischerweise 10V bis 20V zu ihrer Erregung und damit zum Betrieb des Linearmotors.

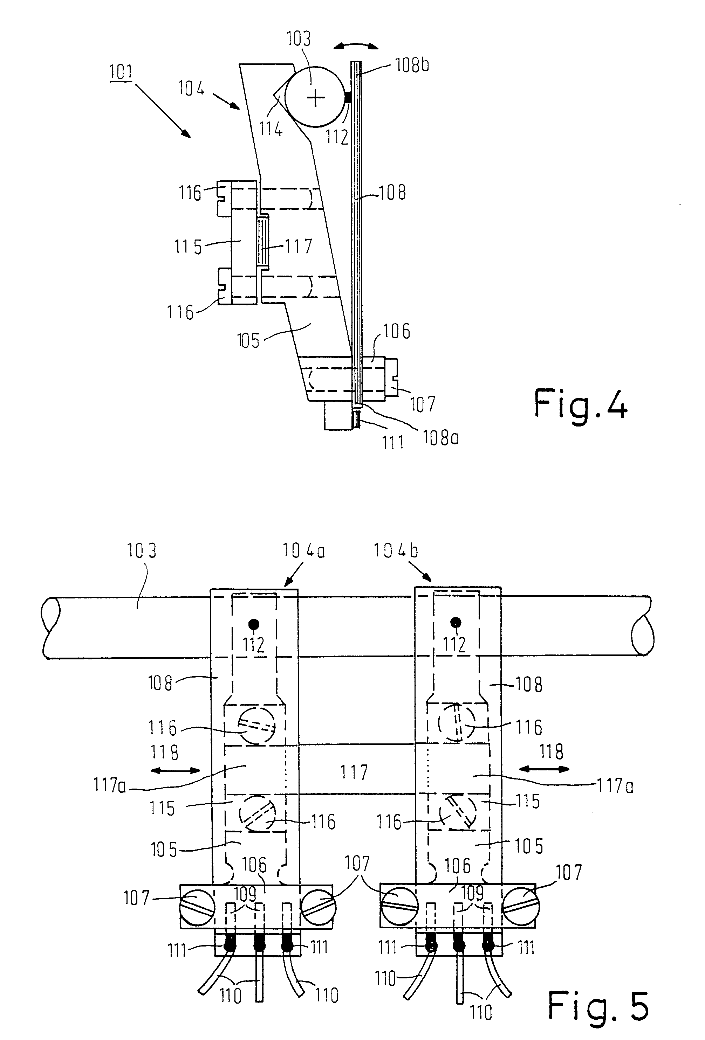

In den Fig. 4 und 5 ist eine andere Ausführungsform des Linearmotors 101 dargestellt, der sich längs der Schiene bewegen kann. Klemmvorrichtungen 104a und 104b umgreifen die Schiene 103. Jeder der Klemmvorrichtungen 104a und 104b besteht aus einem mechanisch steifen Joch 105, an dessen unterem Ende eine Klemmbacke 106 mit Hilfe von zwei Schrauben 107 befestigt ist. Ein langgestreckter piezoelektrischer Biegeaktuator 108, der als Vielschicht-Biege aktuator ausgebildet ist, ist mittels der Klemmbacke 106 an einem seiner Enden 108a eingeklemmt. Drei metallische Anschlußlaschen 109 stellen den elektrischen Kontakt zu den auf dem Biegeaktuator 108 befindlichen Elektrodenanschlüssen her. Die elektrischen Anschlüsse 111 können z. B. durch Anlöten von Zuführungsdrähten 110 an die mit den Anschlußlaschen 109 in Kontakt stehenden Metallzapfen 111 gebildet werden.

In der Nähe seines freien Endes 108b ist am Biegeaktuator 108 eine Keramikscheibe 112 beispielsweise durch Kleben befestigt, die an der Schiene 103 des piezoelektrischen Linearmotors 101 anliegt. Die Schiene 103 liegt in einer V- oder dreieckförmigen Aussparung 114 des Joches 105 und ist somit durch eine Dreipunktauflage geführt. Am Joch 105 ist eine weitere Klemmbacke 115 vorgesehen, die mit zwei Schrauben 116 bei ihrem Anziehen einen Vorschubaktuator 117 an jeweils einem Ende festklemmen kann. Jede der Klemmvorrichtungen 104a und 104b klemmt dabei eines der Enden 117a des Vorschubaktuators 117 fest.

Die Funktionsweise des Linearmotors 101 entspricht der des Linearmotors 1 nach den Fig. 1 bis 3, mit der Ausnahme, daß die Klemmung an der Schiene 103 nicht mittels eines Klemmbügels, sondern mittels des sich durchbiegenden langgestreckten Biegeaktuators 108 erfolgt. Zum Zwecke des Klemmens wird der Biegeaktuator 108 gegen die Schiene 103 gebogen, und zum Lösen der Klemmvorrichtung wird der Biegeaktuator 108 von der Schiene weggebogen. Die mechanische Auslenkung am freien Ende 108b des Biegeaktuators kann bei einer elektrischen Spannung von 15 V bis 30 V ca. 100 μm bis 200 μm betragen.

Um den Linearmotor 101 längs der Schiene 103 zu bewegen, wird beispielsweise der Biegeaktuator 108 der Klemmvorrichtung 104a gegen die Schiene 103 gebogen. Hierbei kann der gewünschte Anpreßdruck durch die elektrische Vorspannung vorgewählt werden. Der Biegeaktuator 108 der Klemmvorrichtung 104b wird dagegen von der Schiene weggebogen. Auch dabei wird der nur noch geringe Anpreßdruck elektrisch vorgewählt. Wird nun der Vorschubaktuator 117 erregt, dann entfernt sich die Klemmvorrichtung 104b um den Längungsweg des Vorschubaktuators 117. Nach dem Ende des Längens des Vorschubaktuators 117 wird der Biegeaktuator 108 der Klemmvorrichtung auf die Schiene 103 zu gebogen, womit jetzt auch die Klemmvorrichtung 104b an der Schiene festklemmt. Nun wird der Biegeaktuator 108 der Klemmvorrichtung 104b von der Schiene 103 weggebogen, und die Klemmvorrichtung 104a ist damit frei beweglich. Wird nun der Vorschubaktuator 117 entregt und dadurch verkürzt, dann folgt die Klemmvorrichtung 104a der Klemmvorrichtung 104b nach. Durch ständiges Wiederholen dieser Erregungs-, Entregungs- und Umerregungsvorgänge wandert der Linearmotor 101 längs der Schiene 103.

Ein Vorteil der Ausführungsform nach Fig. 4 und 5 besteht darin, daß die Herstellungstoleranzen der Schiene 103 nur geringe Bedeutung haben.

Die Vorrichtung eignet sich beispielsweise zum Verschieben einer optischen Einheit in einem CD-Spieler. die Ansteuerung ist einfach und kann sehr kleinbauend ausgeführt werden.

## Ansprüche

1. Piezoelekrischer Linearmotor zur Ausführung von Linearbewegungen relativ zu einer Schiene (3), auf die in gegenseitigem Abstand piezoelektrische Klemmvorrichtungen (4) mit Klemmaktuatoren (13) einwirken, die abwechselnd im Gegentakt die Schiene (3) festklemmen, dadurch gekennzeichnet, daß der gegenseitige Abstand der Klemmvorrichtungen (4) mittels eines diese verbindenden piezoelektrischen Vorschubaktuators (19) im Takt des wechselseitigen Klemmens der Klemmvorrichtungen (4) um das Längungsmaß des Vorschubaktuators (19) veränderbar ist und daß die piezoelektrischen Klemmaktuatoren (13) in Längungsrichtung an der Basis (8, 28) eines Klemmbügels (5, 25) angreifen mittels im Abstand voneinander angeordneter Füße (12, 31, 32), wobei die freien Bügelarme (6, 7; 26, 27) bei Längung des piezoelektrischen Klemmaktuators (13) und Durchbiegung der Basis (8, 28) die Schiene (3) zwischen sich einklemmen.

2. Piezoelektrischer Linearmotor nach Anspruch 1, dadurch gekennzeichnet, daß an den freien Enden der Bügelarme (6, 7; 26, 27) Andrucklager (15, 16; 33, 34) vorgesehen sind, zwischen denen die Schiene (3) einklemmbar ist.

3. Piezoelektrischer Linearmotor nach Anspruch 2, dadurch gekennzeichnet, daß ein Andruckstück (35) vorgesehen ist, welches senkrecht zur Klemmvorrichtung der Andrucklager (33, 34) gegen die Schiene (3) zustellbar ist.

4. Piezoelektrischer Linearmotor nach Anspruch 3, dadurch gekennzeichnet, daß das Andruckstück (35) an einem Federbügel (36) angeordnet ist, dessen Befestigungsende an der Basis (28) befestigt ist und dessen freies Einstellende zur Abstandseinstellung mittels einer Stellschraube (38) gegenüber der Schiene (3) einstellbar ist zur Einstellung der Andruckkraft des Andruckstückes (35) gegenüber der Schiene (3).

5. Piezeelektrischer Linearmotor nach dem Oberbegriff des Anspruches 1, dadurch gekennzeichnet, daß die Klemmaktuatoren (108) als langgestreckte Biegeaktuatoren ausgebildet und jeweils mit einem ihrer Enden (108b) an der zugeordneten Klemmvorrichtung (104a, 104b) angeordnet sind und mit den anderen freien Enden (108a) gegen die Schiene (103) und ein Andrucklager (114) der Klemmvorrichtung (104a, 104b) drückbar sind.

6. Piezoelektrischer Linearmotor nach den Ansprüchen 1 oder 5, dadurch gekennzeichnet, daß die Klemmaktuatoren (13, 108) und Vorschubaktuatoren (19, 117) als laminierte Vielschicht-Aktuatoren ausgeführt sind, die aus einer Vielzahl piezoelektrischer Keramikschichten mit metallischen Zwischenelektroden bestehen.

7. Piezoelektrischer Linearmotor nach den Ansprüchen 2 oder 5, dadurch gekennzeichnet, daß die Andrucklager (15) eine V-förmige Lagergrube aufweisen.

8. Piezoelektrischer Linearmotor nach Anspruch 7, dadurch gekennzeichnet, daß eines der Andrucklager (15) eine V-förmige Lagergrube und das andere (16) eine Stellschraube (17) ist, mit der die Andruckkraft der Schiene (3) gegen die Lagergrube (15) einstellbar ist.

9. Piezoelektrischer Linearmotor nach Anspruch 7, dadurch gekennzeichnet, daß beide Andrucklager (33, 34) des Klemmbügels (25) als V-förmige Lagergruben ausgebildet sind.

Fig.1

Fig.2

1-III-PHD 88-154

Fig.3

Fig.4

Fig. 5

3—Ⅲ—PHD 88-154